# EUROPÄISCHE PATENTSCHRIFT

(11) **EP 3 827 670 B1**
(45) Veröffentlichungstag und Bekanntmachung des Hinweises auf die Patenterteilung: **03.07.2024**
(21) Anmeldenummer: 20208772.2
(22) Anmeldetag: 19.11.2020
(51) Int. Cl.: A23G 1/00, A23G 1/10, A23G 1/12

(54) **PROZESSLINIE ZUR PRODUKTION VON SCHOKOLADE MIT VERSCHIEDENEN PROZESSSTUFEN**
PROCESS LINE FOR PRODUCING CHOCOLATE WITH DIFFERENT PROCESS STAGES
LIGNE DE PROCÉDÉ DESTINÉE À LA FABRICATION DE CHOCOLAT AVEC DIFFÉRENTES ÉTAPES DE PROCÉDÉ

(30) Priorität: 29.11.2019 DE 102019132554
(43) Veröffentlichungstag der Anmeldung: 02.06.2021
(73) Patentinhaber: Hamburg Dresdner Maschinenfabriken Verwaltungsgesellschaft mbH, 01239 Dresden (DE)
(72) Erfinder: Lohmüller, Tobias, 01239 Dresden (DE)
(74) Vertreter: terpatent Patentanwälte und European Patent Attorneys ter Smitten Eberlein -Van Hoof

(56) Entgegenhaltungen:
- EP-A1- 3 241 449
- WO-A1-2020/201541
- DE-A1- 19 931 181
- GB-A- 2 314 154
- US-A1- 2016 205 963

## Beschreibung

Die Erfindung betrifft eine Prozesslinie zur Produktion von Schokolade mit verschiedenen Prozessstufen, wobei als jeweilige Prozessstufe zumindest eine Mischanordnung zur Mischung von Schokoladenzutaten, eine Vermahlungsanordnung, und eine Conchieranordnung vorgesehen sind, wobei eine Steuervorrichtung vorgesehen ist, die in Abhängigkeit von Messdaten der Conchieranordnung die Zugabe mindestens einer Schokoladenzutat zur Mischanordnung steuert, wobei die Steuervorrichtung mit jeder Prozessstufe steuerungstechnisch verbunden ist und wobei jeder Prozessstufe mindestens eine Sensoranordnung zugeordnet ist, die steuerungstechnisch mit der Steuervorrichtung verbunden ist, derart, dass jede Prozessstufe einzeln oder in Kombination mit anderen Prozessstufen von der Steuervorrichtung ansteuerbar ist.

Derartige Prozesslinien sind aus dem Stand der Technik hinlänglich bekannt. So offenbart die europäische Patenschrift EP 0 676 922 B1 eine Prozesslinie zur Herstellung von Schokolade, bei der eine Conchieranordnung vorgesehen ist, die Rührelemente aufweist, deren Widerstand beim Conchieren aufgezeichnet wird, um gegebenenfalls über die Steuervorrichtung den Conchiervorgang an sich oder den Fettgehalt der Schokoladenmasse zu variieren. Es hat sich jedoch gezeigt, dass durch eine derartige Anpassung der Durchsatz an Schokoladenmasse hinsichtlich der Rheologie aber nicht auf die gewünschte Geschmacksentwicklung beeinflusst werden kann. Aus der gattungsgemäßen deutschen Offenlegungsschrift DE 199 31 181 A1 ist eine Prozesslinie zur Produktion von Schokolade bekannt, bei der jeder Prozessstufe eine Sensoranordnung zugeordnet ist, die steuerungstechnisch mit der Steuervorrichtung verbunden ist. Hierbei werden verschiedene Sensortypen beispielhaft als mögliche, einzusetzende Sensoren genannt. Die Praxis hat jedoch gezeigt, dass hierdurch zwar eine verbesserte Automatisierung möglich ist, aber Wechselwirkungen der einzelnen Prozessstufen immer noch in unzureichender Weise nachvollzogen und damit in positiver Weise berücksichtigt werden können. Weitere Vorrichtungen im Lebensmittelbereich, die Sensoranordnungen nutzen, um Prozesse zu steuern sind aus dem druckschriftlichen Stand der Technik gemäß der GB 2 314 154 A, EP 3 241 449 A1 und US 2016/205963 A1 bekannt.

Aufgabe der Erfindung ist es daher, den oben genannten Nachteil auf möglichst einfache und kostengünstige Weise zu vermeiden.

Diese Aufgabe wird erfindungsgemäß dadurch gelöst, dass die Mischanordnung einen Plastizitätssensor aufweist, wobei die Vermahlungsanordnung eine Vorvermahlungs- und eine Hauptvermahlungsanordnung aufweist, wobei die Hauptvermahlungsanordnung eine Dünnschichtflüssigkeitseinheit auf die Walzenpaare oder zwischen den Walzen aufweist, wobei die Conchieranordnung als Sensoranordnung mindestens einen Spektroskopiesensor und/oder einen Luftraum-Sensor zur Überwachung von organischen Volatilen aufweist, wodurch die Grundparameter der einzelnen Prozessstufen in der Abhängigkeit ihrer Wechselwirkung zu optimieren sind. Insbesondere ist es hierdurch möglich in Abhägigkeit von Messdaten der Vor- und Hauptvermahlungsanordnung und der Conchieranordnung die Zugabe mindestens einer Schokoladenzutat zur Mischanordnung zu steuern. Die Dünnschichtflüssigkeitseinheit ermöglicht die Vermahlung als solches zu optimieren, aber auch durch Eintrag auf den Schokoladenfilm entscheidende Optimierungen in der Geschmacksentwicklung während des Conchierens zu ermöglichen. Anhand des Spektroskopiesensors ist eine Bewertung des Conchierstatus sowie der Konsistenz der Schokoladenmasse möglich. Mit Hilfe des Luftraum-Sensors können beispielsweise auf einfache Weise flüchtige Bestandteile, wie Ketone, Aldehyde, Säuren sowie der Feuchteanteil des Luftraumes bestimmt werden.

Eine z.B. nicht optimale Schokoladenmasse in der Conchieranordnung kann folglich vor dem Hintergrund der Messergebnisse der Sensoranordnungen in den anderen Prozessstufen zu völlig unterschiedlichen Anpassungsschritten führen.

Da die Schokoladenmasse in dem zu durchlaufenden Prozess entscheidend beeinflusst wird, ist es besonders vorteilhaft, wenn die Vorvermahlungsanordnung als Sensoranordnung einen Leistungssensor einer Antriebseinrichtung der Vorvermahlungsanordnung und/oder einen NIR-Sensor zur Messung der Masse und/oder einen Temperatursensor und/oder einen Feinheitssensor und/oder einen Durchsatzsensor und/oder Plastizitätssensor und/oder Sensor zur Erfassung der Differentialgeschwindigkeiten von Walzen der Vorvermahlungsanordnung aufweist. Die Hauptvermahlungsanordnung kann hierbei in vorteilhafter Weise als Sensoranordnung einen Leistungssensor einer Antriebseinrichtung der Vorvermahlungsanordnung und/oder einen Temperatursensor und/oder einen Belegungssensor von Walzen und/oder einen Feinheitssensor und/oder einen Durchsatzsensor aufweisen.

Die Mischanordnung weist zusätzlich einen Leistungssensor und/oder einen Durchsatzsensor und/oder einen Temperatursensor, um auf diese Weise möglichst früh Rohwarenqualitätsschwankungen und geänderte Randbedingungen in der Prozesslinie detektieren zu können.

In besonders vorteilhafter Weise ist die Steuervorrichtung datentechnisch mit einer Datenbank verbunden, so dass in Abhängigkeit von Messergebnissen der mindestens einen Sensoranordnung mindestens eine Prozessstufe anpassbar ist. Hierdurch ist es möglich, ein qualitativ optimales Ergebnis bei hohem Durchsatz vor dem Hintergrund unterschiedlichster Randbedingungen zu gewährleisten.

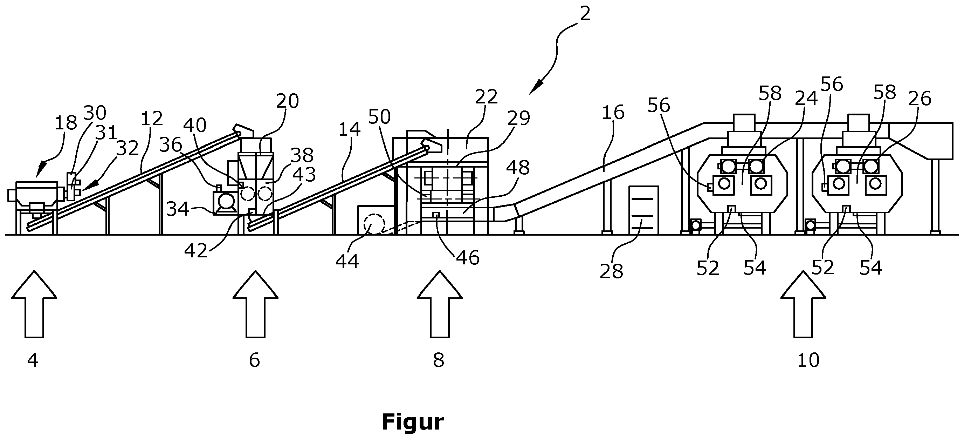

Die Erfindung wird anhand eines in der Zeichnung dargestellten Ausführungsbeispiels näher erläutert, wobei die einzige Figur in einer schematischen Seitenansicht eine Prozesslinie zur Produktion von Schokolade zeigt.

Die einzige Figur zeigt in einer schematischen Seitenansicht eine Prozesslinie 2 zur Produktion von Schokolade mit verschiedenen Prozessstufen 4, 6, 8 und 10, die durch Förderstufen 12, 14 und 16 miteinander verbunden sind.

Hierbei beschreibt die erste Prozessstufe 4 eine Mischstufe, in der Zutaten zur Produktion von Schokolade auf bekannte Weise in einer Mischanordnung 18 gemischt werden. Die Schokoladenmasse wird von dieser Mischanordnung 18 zur zweiten Prozessstufe 6, die als Vorvermahlungsstufe ausgebildet ist und eine Vorvermahlungsanordnung 20 aufweist, die hier als 2-Walzen-Mahlwerk ausgebildet ist, geführt. Von diesem 2-Walzen-Mahlwerk 20 wird die vorliegende Schokoladenmasse über die Förderstufe 14 zur dritten Prozessstufe 8, die als Feinvermahlungsstufe ausgebildet ist, geführt. Die Feinvermahlungsstufe 8 ist im vorliegenden Ausführungsbeispiel als Hauptvermahlungsanordnung 22 dargestellt und weist ein 5-Walzen-Mahlwerk auf. Hier findet eine Feinvermahlung der Schokoladenmasse statt, das nachfolgend mittels der Förderstufe 16 zur vierten Prozessstufe 10, nämlich zur Conchierstufe, geführt wird. Die Conchierstufe 10 ist hier durch zwei Conchieranordnungen 24, 26 ausgebildet, die die Schokoladenmasse von unangenehmen Aromen befreit sowie mit den gewünschten Geschmacksnoten anreichert und schließlich auf die gewünschte Rheologie anpasst. Mit dem Bezugszeichen 28 ist schematisch eine Steuervorrichtung bezeichnet, die mit jeder Prozessstufe 4, 6, 8, 10 steuerungstechnisch verbunden ist, derart dass jede Prozessstufe 4, 6, 8, 10 und damit jede in der jeweiligen Prozessstufe 4, 6, 8, 10 vorhandene Anordnung 18, 20, 22, 24, 26 einzeln oder in Kombination von der Steuervorrichtung 28 ansteuerbar ist.

Um nun ein optimales Schokoladenprodukt in reproduzierbarer Qualität bei optimalem Durchsatz zu gewährleisten, weist jede Prozessstufe 4, 6, 8, 10 und hier jede Anordnung 18, 20, 22, 24, 26 mindestens eine Sensoranordnung 31, 36, 40, 42, 43, 46, 50, 52, 56 auf, um Messdaten auf zu nehmen. Hinzu kommt eine Dünnschichtflüssigbehandlungseinheit 29 die in der Prozessstufe 8 in der Hauptvermahlungsanordnung 22 zwischen jeweiligen Walzenpaaren, z.B. W2/3, vorgesehen ist und die Schokoladenmasse für den Conchierprozess 10 vorbereitet. Im nachfolgenden werden beispielhaft für die Prozessstufen 4, 6, 8, 10 Sensoranordnungen genannt, die eine einfache Optimierung der Schokoladenmasse ermöglichen. Im Anschluss werden dann Beispiele für eine mögliche Ansteuerung der Prozessstufen genannt.

Die in der ersten Prozessstufe angeordnete, an sich bekannte Mischanordnung 18 weist hier eine Antriebseinrichtung 30 mit einem Leistungssensor 31 auf, um einfach den Widerstand und die hier auf zu bringende Mischkraft messen zu können.

Auch in der zweiten Prozessstufe 6 ist in einer Antriebseinrichtung 34 der als 2-Walzen Mahlwerk ausgebildeten Vorvermahlungsanordnung 20 ein Leistungssensor 36 vorgesehen sowie im Vorvermahlungsraum 38 ein NIR-Sensor 40 zur Messung der Trockenmasse und ein Durchsatzsensor 42 im Bereich von zwei nicht weiter dargestellten Walzen der Vorvermahlungsanordnung 20 sowie eine Austragsschnecke mit einem Leistungssensor 43 um die Plastizität der Schokoladenmasse zu messen. In einem 5-Walzen-Mahlwerk der Hauptvermahlungsanordnung 22 mit einer Antriebseinrichtung 44 der dritten Prozessstufe 8 ist im vorliegenden Ausführungsbeispiel ein Feinheitssensor 46 für die Schokoladenmasse im

Hauptvermahlungsraum 48 sowie ein optischer Belegungssensor 50 im Bereich von den letzten zwei der nicht dargestellten fünf Walzen der Hauptvermahlungsanordnung 22 vorgesehen sowie eine Dünnschichtflüssigbehandlungseinheit 29 zur Beaufschlagung von Flüssigkeit des Walzenfilms und eine Differenzialgeschwindigkeitsregulierung.

Zu guter Letzt weisen die zwei Conchieranordnungen 24, 26 der vierten Prozessstufe 10 jeweils einen Spektroskopiesensor 52 im Produktbereich 54 der jeweiligen Conchieranordnung 24, 26 und jeweils einen Luftraum-Sensor 56 im Conchierraum 58 auf. Im vorliegenden Fall ist die Steuervorrichtung 28 in einem Servergehäuse vorgesehen, wobei eine Datenbank mit Messergebnissen und Handlungsanweisungen implementiert ist, um die Steuervorrichtung 28 mit dem entsprechenden Datenmaterial zu versehen. Die Datenbank kann hierbei selbstlernend ausgeführt sein und muss nicht zwingend vor Ort angeordnet sein. Sie kann auch auf einem zentralen Server vorgesehen sein und beispielsweise wireless mit der Steuervorrichtung 28 verbunden sein.

Nachfolgend wird die Funktionsweise der Prozesslinie 2 an zwei Beispielen verdeutlicht:
Der Spektroskopiesensor 52 ist im Kontakt mit der Schokoladenmasse in den Conchieranordnungen 24, 26, sodass die Produkteigenschaften der Schokoladenmasse bewertet werden können, um einen optimalen Durchsatz an Schokoladenmasse zu ermöglichen. Dies wird dadurch erreicht, dass die Sensoren die Conchieranordnungen 24, 26 steuern, in dem z.B. die Leistung des Rührers erhöht/reduziert, die Aspiration des Luftraums aktiviert/geschlossen oder eine Zugabe von Kakaobutter oder Lezithin initiert wird. Auch informiert der Sensor 52 ob die Zusammensetzung in der Mischanordnung 18 optimiert werden muss oder inwieweit der Einsatz der Dünnschichtflüssigkeit-Beaufschlagungseinheit 29 aktivert wird. Zudem misst der NIR-Sensor 40 im 2-Walzen-Mahlwerk 20 eine abweichende Referenzspektrallinie. Dies wird genutzt, um das Mischrezept zu optimieren. Aus diesen Messdaten lässt sich ableiten, dass ein besseres Ergebnis dadurch erzielt werden kann, wenn in der Mischanordnung 18 die Zugabe von Kakaobutter verringert und eine Zugabe der Feststoffanteile, wie zum Beispiel Kakaopulver erhöht wird.

Der Spektroskopiesensor 52 im jeweiligen Conchierraum 58 der Conchieranordnungen 24, 26 detektiert den Zustand der Schokoladenmasse hinsichtlich Rheologie und Geschmack respektive ob der Conchiergrad außerhalb der normalen Referenzabweichung liegt. Wenn dies der Fall sein sollte, entscheidet ein Computeralgorithmus, ob die Vorvermahlung oder die Zusammensetzung des Rezeptes in der Mischanordnung 18 optimiert werden sollte und/oder die Dünnschichtflüssigkeitseinheit 29 der Hauptvermahlungsanordnung 22 aktiviert werden soll, um die Schokoladenmasse anzupassen bzw. während der Vermahlung vorzubehandeln. Bei Meldung des Belegungssensors 50 bzgl. einer ungleichmäßigen Belegung wird entweder die Vorvermahlungsanordnung 20, das Rezept in der Mischanordnung 18 oder die Differenzialgeschwindigkeit/Temperatur der Walzen in der Hauptvermahlungsanordnung 22 geändert. Gleichzeitig erfolgt eine Feinheitsmessung, die zeitgleich auf die gewünschte Feinheit reguliert, die die Differenzialgeschwindigkeit oder das Spaltmaß zwischen zwei Walzen einstellt und nötigenfalls auch die Dünnschichtflüssigkeitseinheit aktiviert. Gegebenenfalls wird die Rezepteinstellung an der Mischanordnung 18 derart geändert, dass eine gewünschte Feinheit der Schokoladenmasse erreicht wird und die Walzen der Hauptvermahlungsanordnung 22 gleichmäßig belegt werden, so dass der optimale Conchierablauf in gegebener optimaler Zeit ablaufen kann.

## Patentansprüche

1. Prozesslinie zur Produktion von Schokolade mit verschiedenen Prozessstufen (4, 6, 8, 10), wobei als jeweilige Prozessstufe (4, 6, 8, 10) zumindest eine Mischanordnung (18) zur Mischung von Schokoladenzutaten, eine Vermahlungsanordnung (20, 22), und eine Conchieranordnung (24, 26) vorgesehen sind, wobei eine Steuervorrichtung (28) vorgesehen ist, die in Abhängigkeit von Messdaten der Conchieranordnung (24, 26) die Zugabe mindestens einer Schokoladenzutat zur Mischanordnung (18) steuert, wobei
die Steuervorrichtung (28) mit jeder Prozessstufe (4, 6, 8, 10) steuerungstechnisch verbunden ist und wobei jeder Prozessstufe (4, 6, 8, 10) mindestens eine Sensoranordnung (31, 36, 40, 42, 43, 46, 50, 52, 56) zugeordnet ist, die steuerungstechnisch mit der Steuervorrichtung (28) verbunden ist, derart, dass jede Prozessstufe (4, 6, 8, 10) einzeln oder in Kombination mit anderen Prozessstufen (4, 6, 8, 10) von der Steuervorrichtung (28) ansteuerbar ist,
**dadurch gekennzeichnet, dass**
die Mischanordnung (18) einen Plastizitätssensor aufweist, wobei die Vermahlungsanordnung eine Vorvermahlungs- und eine Hauptvermahlungsanordnung (20, 22) aufweist, wobei die Hauptvermahlungsanordnung (22) eine Dünnschichtflüssigkeitseinheit (29) auf die Walzenpaare oder zwischen den Walzen aufweist, wobei die Conchieranordnung (24, 26) als Sensoranordnung mindestens einen Spektroskopiesensor (52) und/oder einen Luftraum-Sensor (56) zur Überwachung von organischen Volatilen aufweist, wodurch die Grundparameter der einzelnen Prozessstufen (4, 6, 8, 10) in der Abhängigkeit ihrer Wechselwirkung zu optimieren sind.

2. Prozesslinie nach Anspruch 1, **dadurch gekennzeichnet, dass** die Vorvermahlungsanordnung (20) als Sensoranordnung einen Leistungssensor (36) einer Antriebseinrichtung der Vorvermahlungsanordnung und/oder einen NIR-Sensor (40) zur Messung der Masse und/oder einen Temperatursensor und/oder einen Feinheitssensor und/oder einen Durchsatzsensor (42) und/oder Plastizitätssensor (43) und/oder Sensor zur Erfassung der Differentialgeschwindigkeiten von Walzen der Vorvermahlungsanordnung (20) aufweist.

3. Prozesslinie nach einem der Ansprüche 1 - 2, **dadurch gekennzeichnet, dass** die Hauptvermahlungsanordnung (22) als Sensoranordnung einen Leistungssensor einer Antriebseinrichtung (44) der Hauptvermahlungsanordnung (22) und/oder einen Temperatursensor und/oder einen Belegungssensor (50) von Walzen und/oder einen Feinheitssensor (46) und/oder einen Durchsatzsensor aufweist.

4. Prozesslinie nach einem der vorhergehenden Ansprüche, **dadurch gekennzeichnet, dass** die Mischanordnung (18) zusätzlich einen Leistungssensor (31) und/oder einen Durchsatzsensor und/oder einen Temperatursensor aufweist.

5. Prozesslinie nach einem der vorhergehenden Ansprüche, **dadurch gekennzeichnet, dass** die Steuervorrichtung (28) datentechnisch mit einer Datenbank verbunden ist, so dass in Abhängigkeit von Messergebnissen der mindestens einen Sensoranordnung (31, 36, 40, 42, 43, 46, 50, 52, 56) mindestens eine Prozessstufe (4, 6, 8, 10) anpassbar ist.

## Claims

1. Process line for the production of chocolate with different process stages (4, 6, 8, 10), wherein at least one mixing arrangement (18) for mixing chocolate ingredients, a grinding arrangement (20, 22) and a conching arrangement (24, 26) are provided as the respective process stage (4, 6, 8, 10), wherein a control device (28) is provided which controls the adding of at least one chocolate ingredient to the mixing arrangement (18) as a function of measurement data from the conching arrangement (24, 26), wherein the control device (28) is connected to each process stage (4, 6, 8, 10) in a control-related manner and wherein at least one sensor arrangement (31, 36, 40, 42, 43, 46, 50, 52, 56), which is connected in a control-related manner to the control device (28), is assigned to each process stage (4, 6, 8, 10) in such a way that each process stage (4, 6, 8, 10) can be controlled individually or in combination with other process stages (4, 6, 8, 10) by the control device (28),
**characterized in that**
the mixing arrangement (18) is provided with a plasticity sensor, wherein the grinding arrangement comprises a pre-grinding arrangement and a main grinding arrangement (20, 22), wherein the main grinding arrangement (22) comprises a thin film liquid unit (29) on the pairs of rollers or between the rollers, wherein the conching arrangement (24, 26) comprises as sensor arrangement at least one spectroscopy sensor (52) and/or an air space sensor (56) for monitoring organic volatiles, by means of which the basic parameters of the individual process stages (4, 6, 8, 10) are to be optimized as a function of their interaction.

2. Process line according to claim 1, **characterized in that** the pre-grinding arrangement (20) comprises as sensor arrangement a power sensor (36) of a drive device of the pre-grinding arrangement and/or an NIR sensor (40) for measuring the mass and/or a temperature sensor and/or a fineness sensor and/or a throughput sensor (42) and/or plasticity sensor (43) and/or sensor for detecting the differential speeds of rollers of the pre-grinding arrangement (20).

3. Process line according to one of claims 1-2, **characterized in that** the main grinding arrangement (22) comprises as sensor arrangement a power sensor of a drive device (44) of the main grinding arrangement (22) and/or a temperature sensor and/or an occupation sensor (50) of rollers and/or a fineness sensor (46) and/or a throughput sensor.

4. Process line according to one of the preceding claims, **characterized in that** the mixing arrangement (18) additionally comprises a power sensor (31) and/or a throughput sensor and/or a temperature sensor.

5. Process line according to one of the preceding claims, **characterized in that** the control device (28) is connected in a data-based manner to a database, so that at least one process stage (4, 6, 8, 10) can be adapted as a function of measurement results of the at least one sensor arrangement (31, 36, 40, 42, 43, 46, 50, 52, 56).

## Revendications

1. Linge de production de chocolat avec différentes unités de traitement (4, 6, 8, 10), dans laquelle il est prévu comme unité de traitement respective (4, 6, 8, 10) au moins un arrangement de mélange (18) pour le mélange d'ingrédients de chocolat, un arrangement de moulinage (20, 22) et un arrangement de conchage (24, 26), dans laquelle il est prévu un appareil de commande (28) qui, en fonction de données de mesure de l'arrangement de conchage (24, 26), commande l'ajout d'au moins un ingrédient de chocolat à l'arrangement de mélange (18), dans laquelle
le dispositif de commande (28) est relié à chaque unité de traitement (4, 6, 8, 10) du point de vue de la technique de commande et dans lequel à chaque unité de traitement (4, 6, 8, 10) est associé au moins un ensemble de capteurs (31, 36, 40, 42, 43, 46, 50, 52, 56) qui est relié à l'appareil de commande (28) du point de vue de la technique de commande, de telle sorte que chaque unité de traitement (4, 6, 8, 10) puisse être commandée par l'appareil de commande (28) individuellement ou en combinaison avec d'autres unités de traitement (4, 6, 8, 10),
**caractérisé en ce que**
l'arrangement de mélange (18) comprend un capteur de plasticité, l'arrangement de moulinage comprenant un ensemble de pré-broyage et un ensemble de moulinage principal (20, 22), l'ensemble de moulinage principal (22) comprenant une unité de liquide en couche mince (29) sur les paires de rouleaux ou entre les rouleaux, l'arrangement de conchage (24, 26) comprenant comme ensemble de capteurs au moins un capteur de spectroscopie (52) et/ou un capteur d'espace d'air (56) pour surveiller les volatiles organiques, ce qui permet d'optimiser les paramètres de base des différentes unités de traitement (4, 6, 8, 10) en fonction de leur interaction.

2. Linge de production selon la revendication 1, **caractérisée en ce que** l'ensemble de capteurs (20) comprend un capteur de puissance (36) d'un dispositif d'entraînement de l'ensemble de pré-broyage et/ou un capteur NIR (40) pour la mesure de la masse et/ou un capteur de température et/ou un capteur de finesse et/ou un capteur de débit (42) et/ou un capteur de plasticité (43) et/ou un capteur pour détecter les vitesses différentielles des cylindres de de l'ensemble de pré-broyage (20).

3. Linge de production selon l'une des revendications 1 à 2, **caractérisée en ce que** l'ensemble de capteurs (22) comprend un capteur de puissance d'un dispositif d'entraînement (44) de l'ensemble de moulinage principal (22) et/ou un capteur de température et/ou un capteur d'occupation (50) de cylindres et/ou un capteur de finesse (46) et/ou un capteur de débit.

4. Linge de production selon l'une des revendications précédentes, **caractérisée en ce que** l'arrangement de mélange (18) comprend en outre un capteur de puissance (31) et/ou un capteur de débit et/ou un capteur de température.

5. Linge de production selon l'une des revendications précédentes, **caractérisée en ce que** l'appareil de commande (28) est relié par des données à une base de données, de sorte qu'au moins une unité de traitement (4, 6, 8, 10) peut être adaptée en fonction des résultats de mesure d'au moins un ensemble de capteurs (31, 36, 40, 42, 43, 46, 50, 52, 56).
